# EUROPEAN PATENT APPLICATION

(11) **EP 4 443 114 A1**
(43) Date of publication of application: **09.10.2024**
(21) Application number: 21966409.1
(22) Date of filing: 02.12.2021
(51) Int. Cl.: G01D 11/24

(54) **SENSOR DEVICE**

(71) Applicant: JTEKT Corporation, Kariya-shi, Aichi 448-8652 (JP)
(72) Inventor: NONOYAMA Toshio, Kariya-shi, Aichi 448-8652 (JP)
(74) Representative: Winter, Brandl - Partnerschaft mbB
(86) International application number: PCT/JP2021/044297
(87) International publication number: WO 2023/100326

(57) **Abstract**

A sensor device (10) is configured to be penetrated by a shaft (100) as a target to be detected. The sensor device includes a housing (20) that includes a harness draw-out portion (40), and a sensor (30) positioned in the housing. The sensor includes a sensor body (31) and a harness (32) to be drawn out of the sensor body via the harness draw-out portion. The housing includes a housing body (21) that has an opening portion (21A), and a cover (22) that closes the opening portion. The harness draw-out portion includes a first draw-out portion (41) provided in a peripheral wall of the housing body, and a second draw-out portion (42) provided in a peripheral wall of the cover. The first draw-out portion and the second draw-out portion are configured to sandwich the entire circumference of a corresponding portion of the harness in a compressing manner.

## Description

### TECHNICAL FIELD

The present disclosure relates to a sensor device.

### BACKGROUND ART

A sensor device according to Patent Document 1 is provided on a steering shaft. The sensor device includes a housing that is made of a synthetic resin and that houses a detection unit. The detection unit includes a component for detecting torque or the rotational angle of the shaft. A connector fitting portion is provided outside the housing. A connector for connecting an external controller is fitted with the connector fitting portion.

### Related Art Documents

### Patent Documents

Patent Document 1: Japanese Unexamined Patent Application Publication No. 2019-74365 (JP 2019-74365 A)

### SUMMARY OF THE INVENTION

### Problem to be Solved by the Invention

In the sensor device according to Patent Document 1, the connector fitting portion is provided outside the housing. Therefore, it is necessary to use a waterproof connector when the sensor device is used in a vehicle or outdoors, for example. The waterproof connector is an expensive connector that has a waterproof function.

### Means for Solving the Problem

An aspect of the present disclosure provides a sensor device configured to be penetrated by a shaft as a target to be detected. The sensor device includes: a housing that includes a harness draw-out portion; and a sensor positioned in the housing. The sensor includes a sensor body configured to detect a physical quantity related to motion of the shaft, and a harness to be drawn out of the sensor body via the harness draw-out portion. The housing includes a housing body that has an opening portion that opens in an axial direction of the shaft, and a cover that closes the opening portion. The harness draw-out portion includes a first draw-out portion provided in a peripheral wall of the housing body, and a second draw-out portion provided in a peripheral wall of the cover. The first draw-out portion and the second draw-out portion are configured to sandwich an entire circumference of a corresponding portion of the harness in a compressing manner.

### BRIEF DESCRIPTION OF THE DRAWINGS

[FIG. 1] FIG. 1 is a sectional view of a sensor device according to an embodiment.
[FIG. 2] FIG. 2 is an exploded perspective view of a harness draw-out portion of the sensor device in FIG. 1.
[FIG. 3] FIG. 3 is an exploded side view of the harness draw-out portion of the sensor device in FIG. 1.
[FIG. 4] FIG. 4 is an exploded sectional view of the harness draw-out portion of the sensor device in FIG. 1.
[FIG. 5] FIG. 5 is an exploded sectional view of the sensor device in FIG. 1.
[FIG. 6] FIG. 6 is a sectional view illustrating the harness draw-out portion of the sensor device in FIG. 1.
[FIG. 7] FIG. 7 is a sectional view illustrating a harness draw-out portion of a sensor device according to another embodiment.
[FIG. 8] FIG. 8 is an exploded side view of a harness draw-out portion of a sensor device according to another embodiment.
[FIG. 9] FIG. 9 is a side view illustrating a modification of the configuration in FIG. 8.
[FIG. 10] FIG. 10 is a perspective view of a harness according to another embodiment.
[FIG. 11] FIG. 11 is a perspective view of a harness according to another embodiment.

### MODES FOR CARRYING OUT THE INVENTION

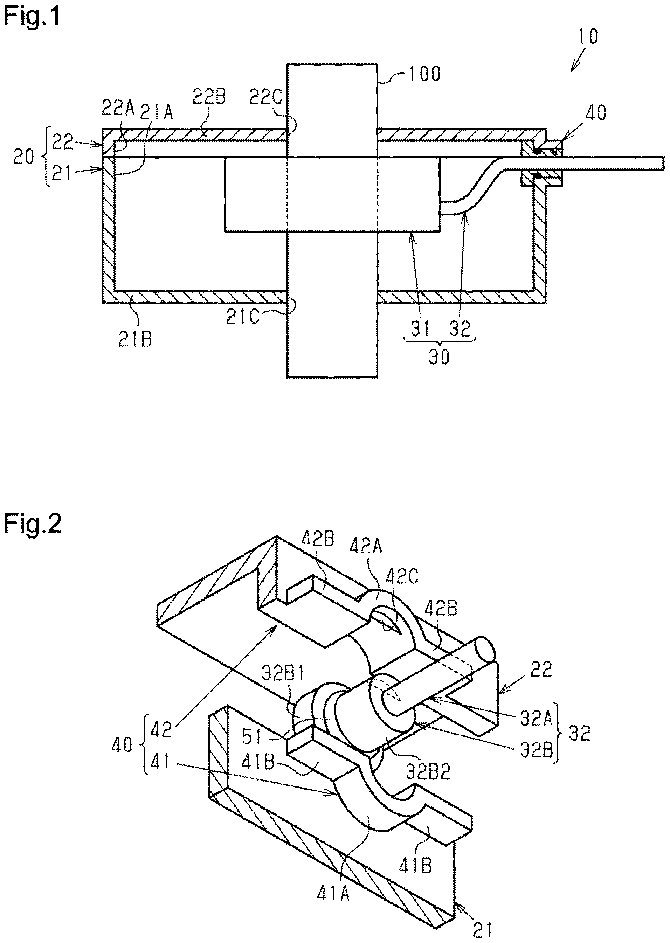

A sensor device according to an embodiment will be described. As illustrated in FIG. 1, a sensor device 10 is provided on a shaft 100 as a target to be detected. The shaft 100 may be a steering shaft of a vehicle, for example. The steering shaft is rotated in conjunction with an operation of a steering wheel. The shaft 100 is provided so as to penetrate the sensor device 10 in the axial direction. The shaft 100 is held such that movement of the shaft 100 in the axial direction is restricted.

### <Housing>

The sensor device 10 includes a housing 20. The housing 20 includes a housing body 21 and a cover 22.

The housing body 21 is box-shaped and has an opening portion 21A. The opening portion 21A opens in a direction orthogonal to an end wall 21B of the housing body 21. The end wall 21B has a first insertion hole 21C for insertion of the shaft 100. The first insertion hole 21C is positioned at the center portion of the end wall 21B. The first insertion hole 21C penetrates the end wall 21B in the axial direction. The shaft 100 is supported so as to be rotatable with respect to the inner peripheral surface of the first insertion hole 21C. The liquid tightness between the outer peripheral surface of the shaft 100 and the inner peripheral surface of the first insertion hole 21C is secured by a sealing device (not illustrated) provided inside the housing 20.

The cover 22 is box-shaped and has an opening portion 22A. The opening portion 22A opens in a direction orthogonal to an end wall 22B of the cover 22. The cover 22 is attached to the opening end surface of the housing body 21 with the opening portion 22A facing the housing body 21. The cover 22 closes the opening portion 21A of the housing body 21. The end wall 22B has a second insertion hole 22C for insertion of the shaft 100. The second insertion hole 22C is positioned coaxially with the first insertion hole 21C. The second insertion hole 22C penetrates the cover 33 in the axial direction. The shaft 100 is supported so as to be rotatable with respect to the inner peripheral surface of the second insertion hole 22C. The liquid tightness between the outer peripheral surface of the shaft 100 and the inner peripheral surface of the second insertion hole 22C is secured by a sealing device (not illustrated) provided inside the housing 20.

### <Sensor>

The sensor device 10 includes a sensor 30. The sensor 30 is housed inside the housing 20. The sensor 30 includes a sensor body 31 and a harness 32.

The sensor body 31 has a cylindrical shape. The sensor body 31 is mounted to the outer peripheral surface of the shaft 100. The outer peripheral surface of the shaft 100 is rotatable with respect to the inner peripheral surface of the sensor body 31. The sensor body 31 detects a physical quantity related to the motion of the shaft 100. The physical quantity includes torque or the rotation angle of the shaft 100. The sensor body 31 generates an electric signal that matches the physical quantity related to the motion of the shaft 100.

The harness 32 is a multi-conductor wire obtained by bundling a plurality of insulated wires with a sheath that is an insulating film. The harness 32 is drawn radially outward through the outer peripheral surface of the sensor body 31. A first end portion of the harness 32 is connected to the sensor body 31. A second end portion of the harness 32 is drawn out of the housing 20 via a harness draw-out portion 40 provided in the housing 20. The second end portion of harness 32 is connected to an external device. The electric signal generated by the sensor body 31 is transmitted to the external device via the harness 32. Examples of the external device include a controller. The controller controls operation of a target to be controlled using the electric signal generated by the sensor body 31.

### <Configuration of Harness Draw-out Portion 40>

As illustrated in FIG. 2, the harness draw-out portion 40 includes a first draw-out portion 41 and a second draw-out portion 42.

The first draw-out portion 41 is a part of the housing body 21. The first draw-out portion 41 projects from the side surface of the housing body 21 in the direction in which the harness 32 is drawn out. The first draw-out portion 41 includes a first clamp portion 41A and two first flange portions 41B.

The first clamp portion 41A has a semi-cylindrical shape. The first clamp portion 41A has two end portions in the circumferential direction. The first clamp portion 41A opens in the same direction as the direction of the opening portion 21A. The inner surface of the first clamp portion 41A is continuous with the inner surface of the peripheral wall of the housing body 21.

The first flange portions 41B have a flat plate shape. The two first flange portions 41B extend from the two circumferential end portions of the first clamp portion 41A in opposite directions in a direction orthogonal to the axial direction of the first clamp portion 41A. The first flange portions 41B have a flat surface that is flush with the opening end surface of the housing body 21.

The second draw-out portion 42 is a part of the cover 22. The second draw-out portion 42 is provided at a position corresponding to the first draw-out portion 41 when seen in the direction in which the cover 22 is attached. The second draw-out portion 42 projects from the side surface of the cover 22 in the direction in which the harness 32 is drawn out. The second draw-out portion 42 includes a second clamp portion 42A, two second flange portions 42B, and a nail portion 42C.

The second clamp portion 42A has a semi-cylindrical shape. The bore diameter of the second clamp portion 42A is the same as the bore diameter of the first clamp portion 41A. The second clamp portion 42A has two end portions in the circumferential direction. The second clamp portion 42A opens in a direction opposite to the direction of the opening portion 21A. The inner surface of the second clamp portion 42A is continuous with the inner surface of the peripheral wall of the cover 22.

The second flange portions 42B have a flat plate shape. The two second flange portions 42B extend from the two circumferential end portions of the second clamp portion 42A in opposite directions in a direction orthogonal to the axial direction of the second clamp portion 42A. The inner surface of the second clamp portion 42A is continuous with the inner surface of the peripheral wall of the cover 22.

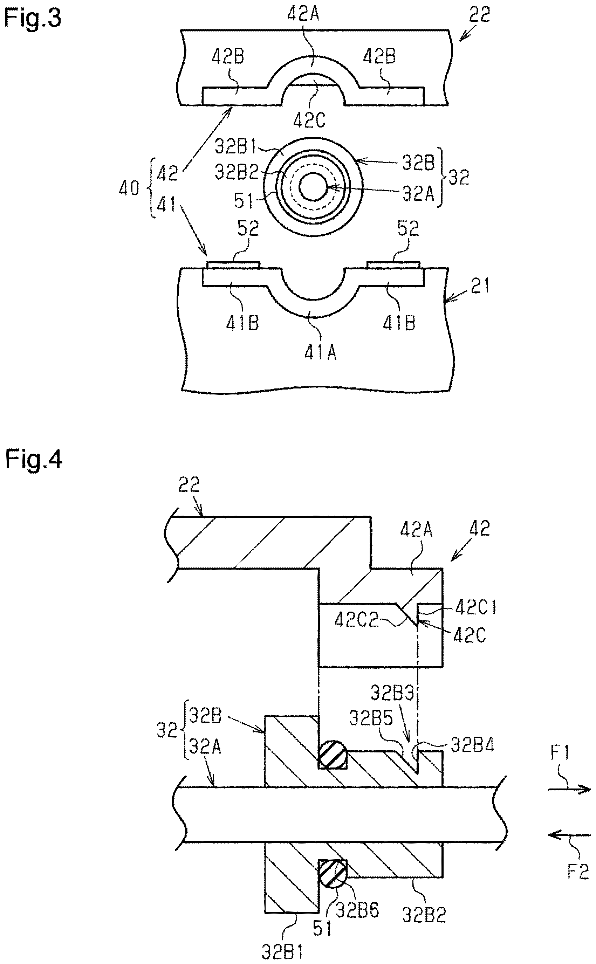

As illustrated in FIG. 3, the nail portion 42C is a projecting portion provided on the inner peripheral surface of the second clamp portion 42A. When seen in the axial direction of the second clamp portion 42A, the nail portion 42C includes a tip end portion that extends linearly in the direction in which the two second flange portions 42B are arranged.

As illustrated in FIG. 4, the nail portion 42C has a thickness in the axial direction of the second clamp portion 42A, and the thickness of the nail portion 42C becomes thinner from the base end toward the tip end of the nail portion 42C. The sectional shape of the nail portion 42C taken along the axial direction of the second clamp portion 42A is a right triangle shape, for example. The nail portion 42C has a first flat surface 42C1 and a first inclined surface 42C2. The first flat surface 42C1 is orthogonal to the axial direction of the second clamp portion 42A. The first flat surface 42C1 is closer to the tip end portion of the second clamp portion 42A in the axial direction than the first inclined surface 42C2. The first inclined surface 42C2 is inclined so as to become farther from the first flat surface 42C1 from the tip end toward the base end of the nail portion 42C.

### <Configuration of Harness 32>

As illustrated in FIG. 2, the harness 32 includes a harness body 32A and a bush 32B. The harness 32 is a composite component in which the harness body 32A and the bush 32B are integrally provided. The bush 32B is provided integrally with the harness body 32A so as to cover the entire circumference of a specific portion of the harness body 32A corresponding to the harness draw-out portion 40.

The bush 32B is a resin molded article, for example. The harness 32 is manufactured by insert molding, for example. The insert molding refers to a molding technique in which a portion of the harness body 32A, which is an article to be inserted, is mounted to an open mold and then the mold is closed to perform injection molding. Inside the mold, the portion of the harness body 32A is wrapped by a molten resin injected into the mold. When this molten resin is cooled and solidified, the bush 32B is formed around the outer periphery of the specific portion of the harness body 32A.

The bush 32B has a two-staged cylindrical shape. The inner peripheral surface of the bush 32B is welded to the outer peripheral surface of the harness body 32A. This secures the liquid tightness between the inner peripheral surface of the bush 32B and the outer peripheral surface of the harness body 32A.

The bush 32B includes a large diameter portion 32B1 and a small diameter portion 32B2. The large diameter portion 32B1 and the small diameter portion 32B2 are positioned coaxially. The large diameter portion 32B1 has a first end surface and a second end surface positioned on opposite sides in the axial direction. In the axial direction of the bush 32B, the second end surface is closer to the small diameter portion 32B2 than the first end surface.

The small diameter portion 32B2 is disposed at a position corresponding to the first clamp portion 41A and the second clamp portion 42A. The outside diameter of the small diameter portion 32B2 is the same as the bore diameter of the first clamp portion 41A and the second clamp portion 42A. The small diameter portion 32B2 can be sandwiched between the first clamp portion 41A and the second clamp portion 42A.

As illustrated in FIG. 4, the small diameter portion 32B2 has a notched groove 32B3. The notched groove 32B3 is disposed at a position corresponding to the nail portion 42C of the cover 22. The contour shape of the notched groove 32B3 corresponds to the contour shape of the nail portion 42C. The sectional shape of the notched groove 32B3 taken along the axial direction of the second clamp portion 42A is a right triangle shape similar to that of the nail portion 42C of the cover 22.

The notched groove 32B3 has a second flat surface 32B4 and a second inclined surface 32B5. The second flat surface 32B4 is orthogonal to the axial direction of the small diameter portion 32B2. The small diameter portion 32B2 has a first end portion coupled to the large diameter portion 32B1 and a second end portion opposite to the first end portion. The second flat surface 32B4 is closer to the second end portion of the small diameter portion 32B2 than the second inclined surface 32B5. The second inclined surface 32B5 is inclined so as to become farther from the second flat surface 32B4 from the bottom toward the opening of the notched groove 32B3. The angle between the second inclined surface 32B5 and the outer peripheral surface of the small diameter portion 32B2 is an obtuse angle. An obtuse angle is an angle greater than 90° and less than 180°.

As illustrated in FIG. 4, the small diameter portion 32B2 has an annular groove 32B6. The annular groove 32B6 is provided at the boundary between the small diameter portion 32B2 and the large diameter portion 32B1. The annular groove 32B6 is provided over the entire circumference of the small diameter portion 32B2.

In addition, the small diameter portion 32B2 includes an O-ring 51. The O-ring 51 is an annular seal member that has a circular cross-sectional shape, and is made of rubber, for example. The O-ring 51 is mounted in the annular groove 32B6. The bore diameter of the O-ring 51 is the same as or slightly smaller than the bore diameter of the annular groove 32B6. The O-ring 51 protrudes radially outward from the annular groove 32B6 when seen in the axial direction of the small diameter portion 32B2. The protruding portion of the O-ring 51 is a compression allowance.

### <Assembly Procedure for Sensor Device 10>

Next, the assembly procedure for the sensor device 10 will be described. The premise for assembling the sensor device 10 is as follows. That is, the harness body 32A of the sensor 30 is provided with the bush 32B in advance. In addition, the O-ring 51 is mounted in advance in the annular groove 32B6 of the bush 32B. The O-ring 51 is mounted from the second end portion of the small diameter portion 32B2. The O-ring 51 is guided by the outer peripheral surface of the small diameter portion 32B2 to reach the annular groove 32B6.

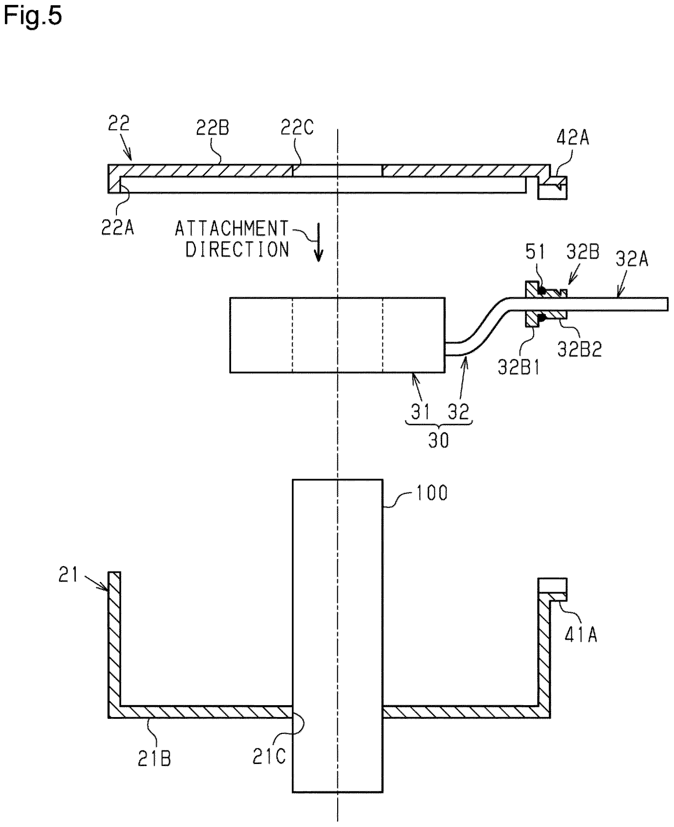

As illustrated in FIG. 5, when assembling the sensor device 10, the housing body 21 is first attached to the shaft 100. The shaft 100 is inserted into the first insertion hole 21C of the housing body 21.

Next, the sensor body 31 is mounted to the shaft 100. The shaft 100 is inserted into the sensor body 31 such that the sensor body 31 is positioned inside the housing body 21. Next, the small diameter portion 32B2 of the bush 32B is placed on the first clamp portion 41A of the housing body 21. At this time, the second end surface of the large diameter portion 32B1 is maintained in contact with a part of the inner surface of the peripheral wall of the housing body 21.

Finally, the cover 22 is attached to the housing body 21. The second clamp portion 42A is opposed to the first clamp portion 41A in the attachment direction of the cover 22. In this state, the shaft 100 is inserted into the second insertion hole 22C of the cover 22. The cover 22 is fixed to the housing body 21 so as to be pressed in the axial direction of the housing body 21 by a tightening member such as a bolt (not illustrated).

When the cover 22 is attached to the housing body 21, the first clamp portion 41A and the second clamp portion 42A constitute a single cylinder that covers the entire circumference of the small diameter portion 32B2. The first clamp portion 41A and the second clamp portion 42A cooperate to sandwich the small diameter portion 32B2 of the bush 32B. In addition, the second flange portion 42B and the first flange portion 41B are maintained in a state in which their opposing surfaces are in contact with each other in the attachment direction of the cover 22.

### The assembly work of the sensor device 10 is completed in this manner.

### <Assembly State of Harness Draw-out Portion>

Next, the assembly state of the harness draw-out portion 40 will be described.

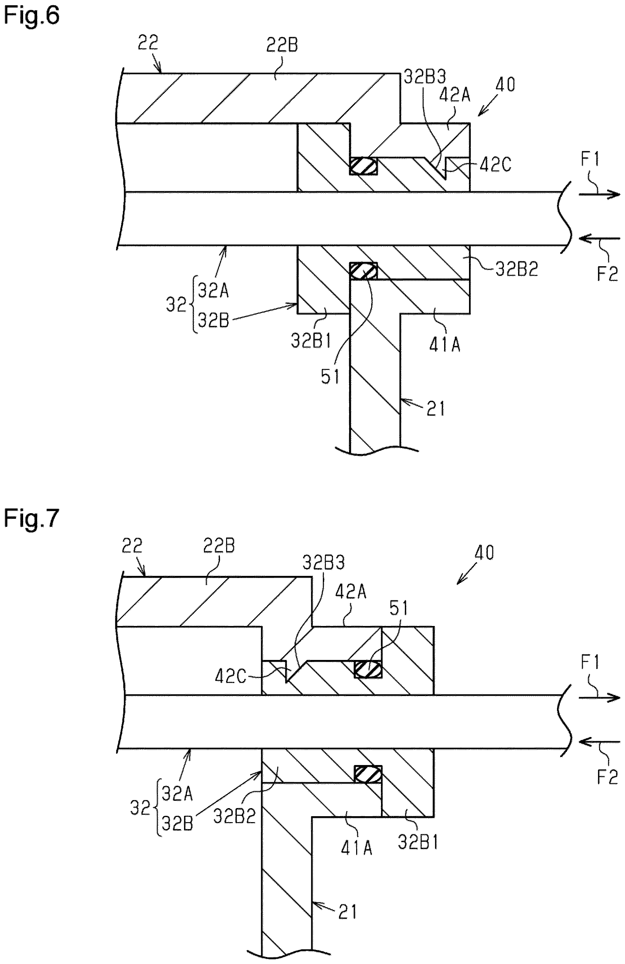

As illustrated in FIG. 6, when the sensor device 10 is assembled, the small diameter portion 32B2 of the bush 32B is maintained in the state of being sandwiched between the first clamp portion 41A of the housing body 21 and the second clamp portion 42A of the cover 22. The first clamp portion 41A and the second clamp portion 42A sandwich the small diameter portion 32B2 so as to compress the entire circumference of the outer peripheral surface of the small diameter portion 32B2 radially inward. The inner peripheral surface of the first clamp portion 41A and the inner peripheral surface of the second clamp portion 42A are maintained in contact with the outer peripheral surface of the small diameter portion 32B2.

In a state in which the sensor device 10 is assembled, the nail portion 42C of the cover 22 is fitted into the notched groove 32B3 of the bush 32B. The nail portion 42C includes a tip end portion that extends linearly in the direction in which the two second flange portions 42B are arranged. This tip end portion is engaged in the notched groove 32B3 to be maintained in abutment with the bottom of the notched groove 32B3. Therefore, rotation of the bush 32B around the axis is restricted.

The first flat surface 42C1 of the nail portion 42C illustrated in FIG. 4 is maintained in contact with the second flat surface 32B4 of the bush 32B. Therefore, movement of the bush 32B in the axial direction into the housing 20 is restricted. In addition, the first inclined surface 42C2 of the nail portion 42C is maintained in contact with the second inclined surface 32B5 of the bush 32B.

In a state in which the sensor device 10 is assembled, a part of the second end surface of the large diameter portion 32B1 is maintained in contact with a part of the inner surface of the peripheral wall of the cover 22 in the axial direction of the bush 32B. In addition, another part of the second end surface of the large diameter portion 32B1 is maintained in contact with a part of the inner surface of the peripheral wall of the housing body 21 in the axial direction of the bush 32B. That is, the second end surface of the large diameter portion 32B1 is maintained in contact with a region of the inner surface of the housing 20 corresponding to the first draw-out portion 41 and the second draw-out portion 42 in the axial direction of the bush 32B. Therefore, movement of the bush 32B in the axial direction to the outside of the housing 20 is restricted.

In a state in which the sensor device 10 is assembled, the entire circumference of the O-ring 51 is maintained in the state of being compressed radially inward by the first clamp portion 41A and the second clamp portion 42A. This secures the liquid tightness between the housing 20 and the bush 32B.

### <Functions and Effects of Embodiment>

The present embodiment has the following functions and effects. (1) The harness 32 is drawn to the outside from the sensor body 31 housed in the housing 20 via the harness draw-out portion 40 of the housing 20. The first clamp portion 41A of the housing body 21 and the second clamp portion 42A of the cover 22 sandwich the bush 32B as a part of the harness 32, thereby securing the liquid tightness of the harness draw-out portion 40. Therefore, it is not necessary to use an expensive waterproof connector. In addition, the first clamp portion 41A and the second clamp portion 42A sandwich the harness body 32A via the bush 32B, suppressing damage to the harness body 32A.

(2) The inner peripheral surface of the bush 32B is maintained in the state of being welded to the outer peripheral surface of the harness body 32A. Therefore, formation of a gap between the inner peripheral surface of the bush 32B and the outer peripheral surface of the harness body 32A is suppressed. Thus, the liquid tightness between the inner peripheral surface of the bush 32B and the outer peripheral surface of the harness body 32A is secured.

(3) The first clamp portion 41A and the second clamp portion 42A of the cover 22 sandwich the small diameter portion 32B2 of the bush 32B, thereby compressing the O-ring 51 mounted to the small diameter portion 32B2. Therefore, the liquid tightness between the inner peripheral surface of the first clamp portion 41A and the outer peripheral surface of the small diameter portion 32B2 is secured. In addition, the liquid tightness between the inner peripheral surface of the second clamp portion 42A and the outer peripheral surface of the small diameter portion 32B2 is secured.

(4) The nail portion 42C of the first clamp portion 41A is engaged to be fitted into the notched groove 32B3 of the small diameter portion 32B2. Therefore, the liquid tightness between the inner peripheral surface of the second clamp portion 42A and the outer peripheral surface of the small diameter portion 32B2 is further improved.

(5) An external force is occasionally applied to the harness 32. As illustrated in FIG. 6, the external force includes an extraction force F1. The extraction force F1 is a force in the direction of extracting the harness 32 from the housing 20. When the extraction force F1 is applied to the harness 32, a portion of the end surface of the large diameter portion 32B1 comes into abutment with a portion of the inside surface of the cover 22 and a portion of the inside surface of the housing body 21 in the direction of extracting the harness 32. Therefore, extraction of the harness 32 from the housing 20 is suppressed.

In addition, the extraction force F1 is received by the housing 20 via the large diameter portion 32B1. Therefore, direct transmission of the extraction force F1 to the portion of the harness 32 housed inside the housing 20 is suppressed. Thus, it is possible to suppress the occurrence of a wire break in at least the portion of the harness 32 housed inside the housing 20.

(6) The external force applied to the harness 32 includes a pushing force F2. As illustrated in FIG. 6, the pushing force F2 is a force in the direction of pushing the harness 32 into the housing 20. When the pushing force F2 is applied to the harness 32, the second flat surface 32B4 of the notched groove 32B3 abuts against the first flat surface 42C1 of the nail portion 42C in the direction of pushing in the harness 32. Therefore, the harness 32 being pushed into the housing 20 is suppressed.

In addition, the pushing force F2 is received by the cover 22 and eventually the housing 20 via the nail portion 42C. Therefore, direct transmission of the pushing force F2 to the portion of the harness 32 housed inside the housing 20 is suppressed. Thus, it is possible to suppress the occurrence of a wire break in at least the portion of the harness 32 housed inside the housing 20.

(7) The O-ring 51 is mounted from the second end portion of the small diameter portion 32B2. The notched groove 32B3 has the second inclined surface 32B5 inclined in the mounting direction of the O-ring 51. The angle between the second inclined surface 32B5 and the outer peripheral surface of the small diameter portion 32B2 is an obtuse angle. Therefore, the O-ring 51 being damaged through contact with the corner portion formed by the second inclined surface 32B5 and the small diameter portion 32B2 in the course of mounting the O-ring 51 to the small diameter portion 32B2 is suppressed.

(8) The harness 32 is drawn out of the sensor device 10 from the outer peripheral surface of the sensor body 31 via the harness draw-out portion 40 positioned on the radially outer side of the sensor body 31. Therefore, it is possible to further shorten the length of the harness 32 housed inside the housing 20. The length of the harness 32 housed inside the housing 20 can be minimized when the harness draw-out portion 40 and a portion of the sensor body 31 through which the harness 32 is drawn out are positioned on the same line.

(9) When assembling the sensor device 10, it is only necessary to sandwich the harness 32 between the first clamp portion 41A of the housing body 21 and the second clamp portion 42A of the cover 22. Therefore, the assembly work of the sensor device 10 is facilitated.

There is a sensor device in which a through hole is provided in a peripheral wall of a housing and a harness is drawn out through the through hole, for example. Compared to this type of sensor device, the sensor device 10 according to the present embodiment requires no effort to pass the harness 32 through the through hole.

(10) The plurality of insulated wires of the harness 32 is covered with a sheath over their entire length. Since the insulated wires are not exposed to the outside of the sensor device 10, the insulated wires can be appropriately protected.

There is a sensor device in which only portions of a plurality of insulated wires that are drawn outside the housing 20 are covered with a sheath, for example. In this type of sensor device, a clearance may be formed between the housing and the sheath. There is a risk that portions of the insulated wires exposed through this clearance are not appropriately protected.

### <Other Embodiments>

The present embodiment may be modified as follows. - As illustrated in FIG. 3, liquid gaskets 52 may be interposed between the first flange portions 41B of the housing body 21 and the second flange portions 42B of the cover 22. The liquid tightness between the first flange portions 41B and the second flange portions 42B is secured.

- The first clamp portion 41A may have a projecting portion similar to the nail portion 42C. In this case, the small diameter portion 32B2 of the bush 32B has a notched groove corresponding to the projecting portion of the first clamp portion 41A.

- As illustrated in FIG. 7, the direction of the bush 32B may be reversed. In this case, the direction of the nail portion 42C is reversed, and therefore the notched groove 32B3 is also provided in the opposite direction. The second end surface of the large diameter portion 32B1 is in contact with the tip end surfaces of the first clamp portion 41A and the second clamp portion 42A in the axial direction of the bush 32B. That is, the second end surface of the large diameter portion 32B1 is maintained in contact with a region of the outer surface of the housing 20 corresponding to the first draw-out portion 41 and the second draw-out portion 42 in the axial direction of the bush 32B.

When the extraction force F1 is applied to the harness 32, the second flat surface 32B4 (see FIG. 4) of the notched groove 32B3 abuts against the first flat surface 42C1 (see FIG. 4) of the nail portion 42C in the axial direction of the bush 32B. This suppresses the harness 32 being drawn out of the housing 20.

When the pushing force F2 is applied to the harness 32, the second end surface of the large diameter portion 32B1 abuts against the tip end surface of the first clamp portion 41A and the tip end surface of the second clamp portion 42A in the axial direction of the bush 32B. This suppresses the harness 32 being pushed into the housing 20.

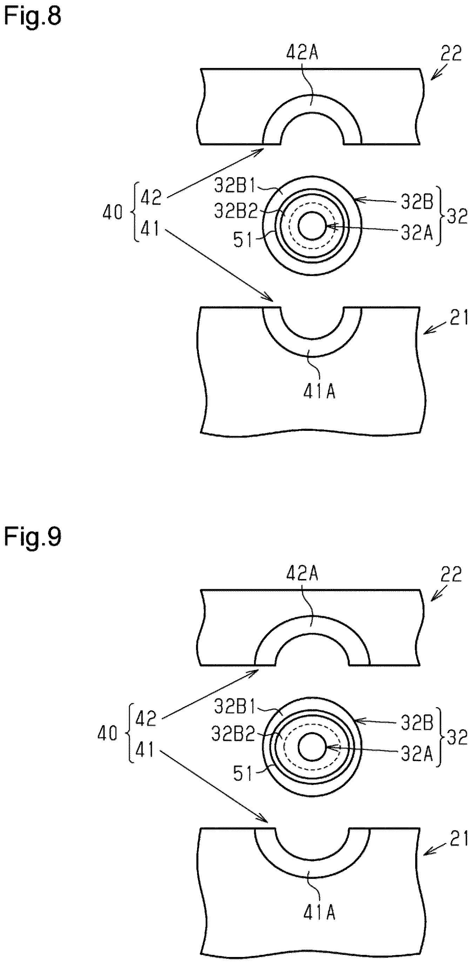

- As illustrated in FIG. 8, the nail portion 42C may be omitted from the second draw-out portion 42. In this case, as illustrated in FIG. 9, the small diameter portion 32B2 may have an elliptical contour shape when seen in the axial direction. In addition, the first clamp portion 41A and the second clamp portion 42A may have an elliptical inner surface corresponding to the contour shape of the small diameter portion 32B2 when seen in the axial direction. In this manner, relative rotation of the small diameter portion 32B2 with respect to the inner surfaces of the first clamp portion 41A and the second clamp portion 42A is restricted.

- As illustrated in FIG. 8, the first flange portions 41B may be omitted from the first draw-out portion 41. In addition, the second flange portions 42B may be omitted from the second draw-out portion 42.

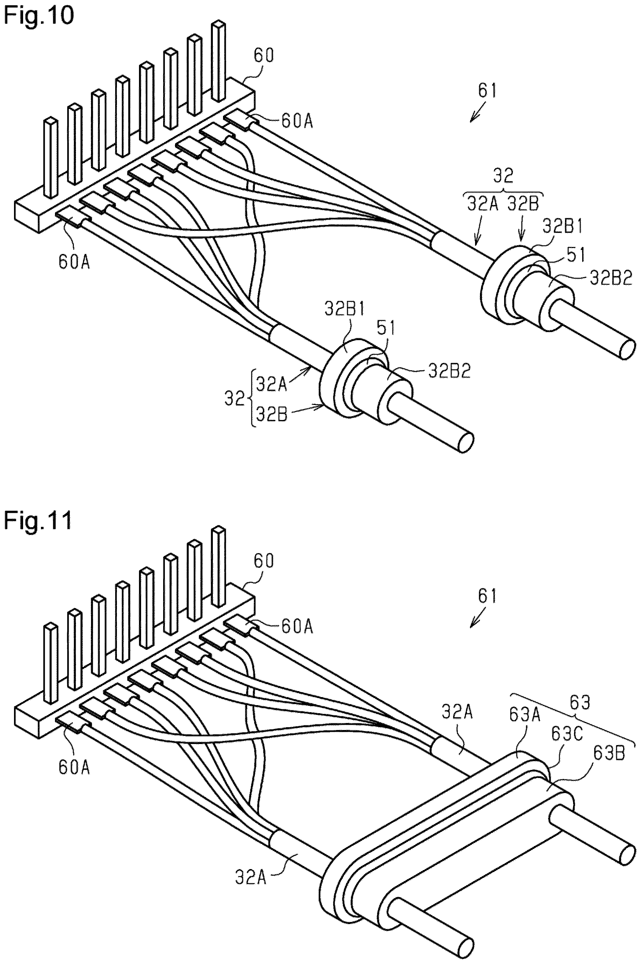

- As illustrated in FIG. 10, a harness 61 that includes a plurality of harnesses 32 and a single connector 60 may be constructed. Each of the harnesses 32 includes a harness body 32A and a bush 32B, as in the previous embodiment. The connector 60 includes a plurality of terminals 60A. Insulated wires exposed from an end portion of each of the harnesses 32 are connected to the terminals 60A of the connector 60.

As illustrated in FIG. 11, meanwhile, the harness 61 may include a single bush 63 that collectively wraps a plurality of harness bodies 32A. The bush 63 includes a large diameter portion 63A, a small diameter portion 63B, and an O-ring 63C. The large diameter portion 63A, the small diameter portion 63B, and the O-ring 63C correspond to the large diameter portion 32B1, the small diameter portion 32B2, and the O-ring 51, respectively, of the bush 32B.

## Claims

1. A sensor device configured to be penetrated by a shaft as a target to be detected, the sensor device comprising:
a housing that includes a harness draw-out portion; and
a sensor positioned in the housing, wherein:
the sensor includes a sensor body configured to detect a physical quantity related to motion of the shaft, and a harness to be drawn out of the sensor body via the harness draw-out portion;
the housing includes a housing body that has an opening portion that opens in an axial direction of the shaft, and a cover that closes the opening portion;
the harness draw-out portion includes a first draw-out portion provided in a peripheral wall of the housing body, and a second draw-out portion provided in a peripheral wall of the cover; and
the first draw-out portion and the second draw-out portion are configured to sandwich an entire circumference of a corresponding portion of the harness in a compressing manner.

2. The sensor device according to claim 1, wherein:
the harness includes a harness body and a bush provided integrally with the harness body so as to cover an entire circumference of a portion of the harness body corresponding to the harness draw-out portion; and
the first draw-out portion and the second draw-out portion are configured to sandwich an entire circumference of a portion of the bush.

3. The sensor device according to claim 2, wherein:
an outer peripheral surface of the bush has a notched groove;
the first draw-out portion includes a first clamp portion in a semi-cylindrical shape;
the second draw-out portion includes a second clamp portion in a semi-cylindrical shape;
the first clamp portion and the second clamp portion constitute a single cylinder that covers the entire circumference of the portion of the bush; and
an inner peripheral surface of at least one of the first clamp portion and the second clamp portion includes a projecting portion, the projecting portion being engaged to be fitted into the notched groove.

4. The sensor device according to claim 2 or 3, wherein:
the bush includes a large diameter portion positioned inside the housing, and a small diameter portion to be sandwiched between the first draw-out portion and the second draw-out portion; and
the large diameter portion has a flat surface that abuts against a region of an inner surface of the housing corresponding to the first draw-out portion and the second draw-out portion in an axial direction of the bush.

5. The sensor device according to claim 2 or 3, wherein:
the bush includes a large diameter portion positioned outside the housing, and a small diameter portion to be sandwiched between the first draw-out portion and the second draw-out portion; and
the large diameter portion has a flat surface that abuts against a region of an outer surface of the housing corresponding to the first draw-out portion and the second draw-out portion in an axial direction of the bush.

6. The sensor device according to claim 4 or 5, wherein:
the small diameter portion includes an annular seal member mounted to an outer periphery of the small diameter portion; and
the first draw-out portion and the second draw-out portion are configured to compress an entire circumference of the seal member.

7. The sensor device according to claim 2, wherein the bush is a resin molded article, and is fixed with an inner peripheral surface of the bush welded to an outer peripheral surface of the harness.

## Amended claims

### Amended claims under Art. 19.1 PCT

1. A sensor device configured to be penetrated by a shaft as a target to be detected, the sensor device comprising:
a housing that includes a harness draw-out portion; and
a sensor positioned in the housing, wherein:
the sensor includes a sensor body configured to detect a physical quantity related to motion of the shaft, and a harness to be drawn out of the sensor body via the harness draw-out portion;
the housing includes a housing body that has an opening portion that opens in an axial direction of the shaft, and a cover that closes the opening portion;
the harness draw-out portion includes a first draw-out portion provided in a peripheral wall of the housing body, and a second draw-out portion provided in a peripheral wall of the cover;
the first draw-out portion and the second draw-out portion are configured to sandwich an entire circumference of a corresponding portion of the harness in a compressing manner;
the harness includes a harness body and a bush provided integrally with the harness body so as to cover an entire circumference of a portion of the harness body corresponding to the harness draw-out portion;
the first draw-out portion and the second draw-out portion are configured to sandwich an entire circumference of a portion of the bush;
the bush includes a large diameter portion positioned inside or outside the housing, and a small diameter portion to be sandwiched between the first draw-out portion and the second draw-out portion; and
the large diameter portion has a flat surface that abuts against a region of an inner surface or an outer surface of the housing corresponding to the first draw-out portion and the second draw-out portion in an axial direction of the bush.

2. The sensor device according to claim 1, wherein:
an outer peripheral surface of the bush has a notched groove;
the first draw-out portion includes a first clamp portion in a semi-cylindrical shape;
the second draw-out portion includes a second clamp portion in a semi-cylindrical shape;
the first clamp portion and the second clamp portion constitute a single cylinder that covers the entire circumference of the portion of the bush; and
an inner peripheral surface of at least one of the first clamp portion and the second clamp portion includes a projecting portion, the projecting portion being engaged to be fitted into the notched groove.

3. The sensor device according to claim 1, wherein:
the large diameter portion is positioned inside the housing; and
the large diameter portion has a flat surface that abuts against a region of the inner surface of the housing corresponding to the first draw-out portion and the second draw-out portion in the axial direction of the bush.

4. The sensor device according to claim 1, wherein:
the large diameter portion is positioned outside the housing; and
the large diameter portion has a flat surface that abuts against a region of the outer surface of the housing corresponding to the first draw-out portion and the second draw-out portion in the axial direction of the bush.

5. The sensor device according to claim 1, wherein:
the small diameter portion includes an annular seal member mounted to an outer periphery of the small diameter portion; and
the first draw-out portion and the second draw-out portion are configured to compress an entire circumference of the seal member.

6. The sensor device according to any one of claims 1 to 5, wherein the bush is a resin molded article, and is fixed with an inner peripheral surface of the bush welded to an outer peripheral surface of the harness.

7. (Canceled)
